# EUROPEAN PATENT SPECIFICATION

(11) **EP 1 163 714 B1**
(45) Date of publication and mention of the grant of the patent: **11.01.2006**
(21) Application number: 00916540.8
(22) Date of filing: 20.03.2000
(51) Int. Cl.: H02K 1/18, F16F 1/18, H02K 5/24, H02K 5/14

(54) **SPRING MOUNTING FOR AN ELECTRIC GENERATOR**
ELASTISCHES LAGER FÜR EINEN ELEKTRISCHEN GENERATOR
SUSPENSION A RESSORT POUR GENERATEUR ELECTRIQUE

(30) Priority: 22.03.1999 US 274260; 22.04.1999 US 298260
(43) Date of publication of application: 19.12.2001
(73) Proprietor: Siemens Power Generation, Inc., Orlando FL 32826-2399 (US)
(72) Inventor: CARBONELL, Luis, Enrique, Deltona, FL 32765 (US); SARGEANT, John, Barry, Oviedo, FL 32765 (US); MONTGOMERY, Lon, W., Winter Springs, FL 32708 (US); FULLER, Robert, Allen, Orlando, FL 32817 (US); GREEN, Derek, Wayne, Charlotte, NC 28278 (US)
(74) Representative: Payne, Janice Julia
(86) International application number: PCT/US2000/007323
(87) International publication number: WO 2000/057535

(56) References cited:
- US-A- 3 531 667
- US-A- 4 145 626
- US-A- 4 425 523
- US-A- 4 469 973
- US-A- 4 519 591
- US-A- 4 546 958
- US-A- 4 891 540
- PATENT ABSTRACTS OF JAPAN vol. 9, no. 284 (E-357), 11 November 1985 (1985-11-11) -& JP 60 125137 A (TOSHIBA CORP), 6 July 1985 (1985-07-06)

## Description

### BACKGROUND OF THE INVENTION

The present invention relates to electric generators, and more specifically, to a spring mounting system supporting a stator core within a stator frame of such generators.

As the rotor of an electric generator rotates, its magnetic field revolves in unison with the rotor. This rotating magnetic field exerts a cyclical force on the generator's stator core. This force, in turn, causes vibrations to occur in the core which are of concern in high speed, high power machines. The stator core of a machine having a two-pole rotor experiences an elliptical deformation that follows the rotation of the rotor during operation, with resulting vibrations that are at a frequency twice that of the rotational speed of the rotor. The cyclical vibrations will be transmitted through the frame to the generator foundation. The magnitude will depend upon the degree of isolation incorporated in the design of the support system.

It is known in the art to utilize spring bars to resiliently support a stator core within a stator core frame, as shown in U.S. Patent Number 4,891,540, issued to Cooper, et al. on January 2, 1990. As a further example, U.S. Patent Number 2,811,659, issued to Barlow, et al. on October 29, 1957, discloses a stator core mounted in a stator frame by means of resilient support bars (spring bars) extending axially between ribs of a stator frame and the stator core. Barlow teaches that minimum contact between the spring bars and the stator core minimizes transmission of vibration.

It is also known in the art to utilize spring plates to resiliently support a stator core and stator core frame. For example, U.S. Patent Number 2,320,843, issued to Baudry on June 1, 1943, discloses a stator support structure made from flat plates mounted tangentially to the perimeter of a stator core frame. The support structure of Baudry includes a pair of vertical spring plates mounted to the perimeter of the stator core frame along opposed sides of the frame. These vertical spring plates are placed into compression by the dead weight of the generator stator and frame. Due to the geometry of the plates, they are rigid in the vertical (compression) direction, but are relatively flexible in the horizontal (bending moment) direction. Additional spring plates are attached in a horizontal direction to the perimeter of the stator core frame along its bottom. These plates provide rigid support in the horizontal (compression) direction, but are relatively flexible in the vertical (bending moment) direction. Together, the vertical and horizontal plates provide rigid vertical and horizontal support for the generator, while at the same time providing a degree of flexibility to accommodate radial vibrations of the stator core.

An electric generator may be subjected to short circuit or other abnormal fault conditions during operation. Amplification of these loads can result depending upon the proximity of the operating frequency to the torsional natural frequency of the stator core. The torque load amplification during short circuit conditions is a function of the air gap torque, the system torsional natural frequency, and the rotor rotating frequency. The air gap torque and the rotor frequency are functions of the generator design. However, by controlling the system natural frequency, the off-normal torque loading imposed on the generator support system can be minimized. From the literature it is known that vibration isolation can be achieved when the ratio of forcing frequency to natural frequency is the square root of 2, or preferably 2.5 to 3.5 if significant reduction in response is desired. Therefore, it is desirable to "low tune" the torsional natural frequency of the support system. Although the prior art is based upon this recognition, the reduction in torsional natural frequency of the spring mounted stator core is limited by the resulting high stress and consequent material strength requirements as the support structures of the prior art are slenderized.

### SUMMARY OF THE INVENTION

Thus there is a particular need for a support structure for an electrical generator that is capable of isolating the foundation from rotating force loads while reducing the torque amplification effect under short circuit conditions.

Accordingly, an apparatus for attaching an electric generator stator core to a support structure is described, the apparatus characterized by: a spring bar attached to said stator core at a first location and attached to the support structure at a second location and having an active length portion there between; and said spring bar further comprising a cross-section area that changes along said active length portion. The apparatus may be further characterized by the spring bar being disposed in a tangential direction, and further characterized by a spring plate attached between the spring bar and the support structure, the spring plate being disposed in a vertical plane parallel to an axis of rotation of the electrical generator.

### BRIEF DESCRIPTION OF THE DRAWINGS

For a better understanding of the present invention, the following detailed description should be considered in conjunction with the accompanying drawings in which:
FIG. 1 is a cutaway perspective view of a prior art electric generator illustrating a spring bar mounted between a stator core and stator core frame.
FIG. 2 is a top view of a prior art spring bar.
FIG. 3 is a top view of a first embodiment of a spring bar having a tapered cross-sectional area.
FIG. 4 is a top view of a second embodiment of a spring bar having a tapered cross-sectional area.
FIG. 5 is a top view of a third embodiment of a spring bar having a tapered cross-sectional area.
FIG. 6 is a side view of a laminated spring bar.
FIG. 7 is a partial cutaway perspective view of an electrical generator stator core frame supported by a combination of a spring bar and a spring plate.
FIG. 8 is an end view of the device of FIG. 7.
FIG. 9 is a side elevational view of the stator support structure of FIG. 7.

### DETAILED DESCRIPTION OF THE INVENTION

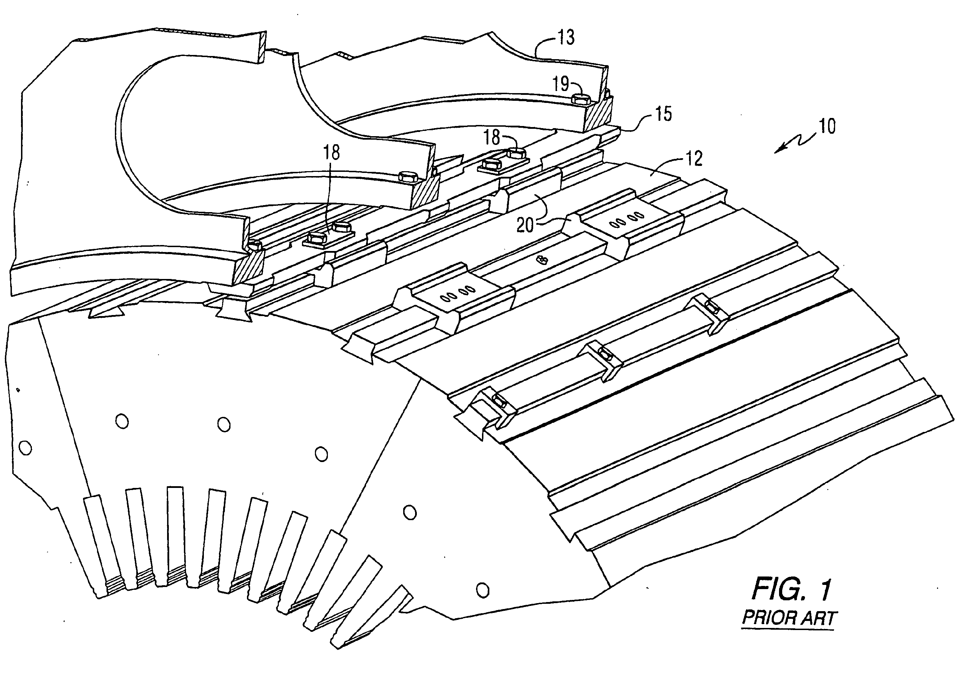

FIG. 1 is a partial cutaway perspective view of a prior art electric generator illustrating a spring bar mounted between a stator core and stator core frame. In the embodiment of FIG. 1 a spring bar 15 extends the longitudinal length of the stator core 12. At a plurality of locations, the spring bar 15 is attached to the stator core 12 by mechanical connections 18. The mechanical connections 18 include brackets 20, sometimes referred to as key blocks, fixed on the stator core 12. A second set of mechanical connections 19 is used to connect the spring bar 15 to the stator core frame 13.

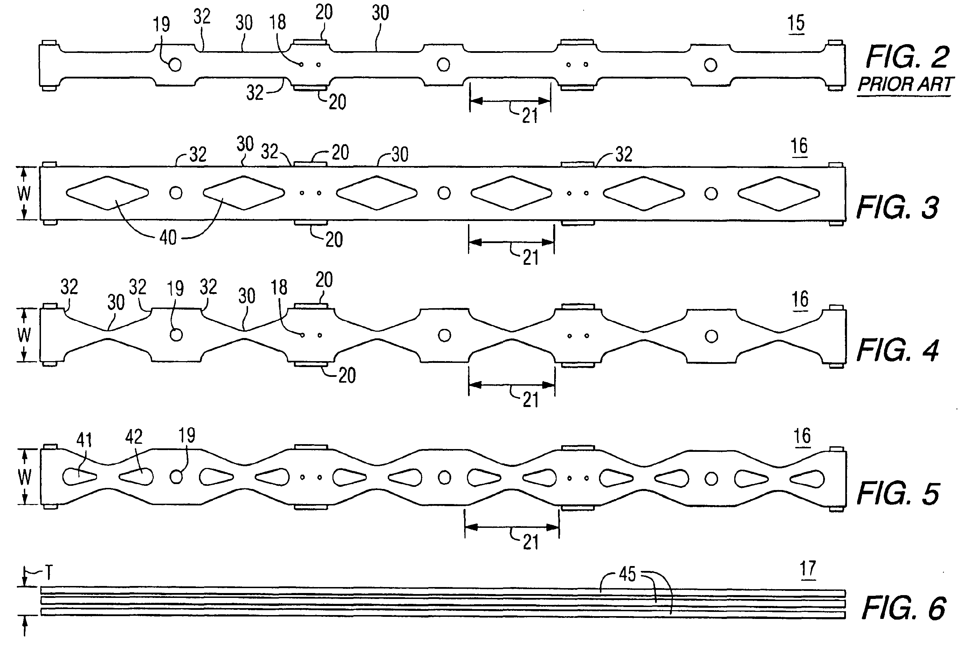

FIG. 2 through FIG. 5 are top views of four spring bars where FIG. 2 illustrates a prior art spring bar and FIGs. 3 through 5 are embodiments of tapered spring bars in accordance with the present invention. The most simple design (not shown) for a spring bar would be to have a constant width along its entire length. However, if the width required at the connections 18,19 is utilized along the entire length of the spring bar, the resulting tangential stiffness of the spring bar will generally be too high.

Prior art spring bars 15 are typically single piece dog-bone shaped structures having a uniform thickness of approximately 3.175 cm (1.25 inches). FIG. 2 illustrates a prior art configuration where the spring bar 15 has a first greater width at the connections 18, 19 and a second smaller width over the remainder of the length of the spring bar 15. This remainder length portion of the spring bar 15 exclusive of the area immediately proximate to the connection locations 18,19 may be referred to as the active length portion 21 of the spring bar 15.

Spring bar 15 carries both shear loads and bending moment loads. The shear loads are constant over the active length portion 21 between connection locations 18,19, however, the bending moments vary from a maximum value at the connection points 18, 19 to zero at a midpoint 30 between the connections 18, 19. Since the cross-sectional area and shape of the spring bar 15 of Figure 2 is constant over the active length portion 21, the total stress is at a maximum at the point 32 at the end of active length portion 21 proximate the connections 18,19. An increase in the cross-sectional area of the section between the connections 18,19 will reduce the value of maximum stress, but will also increase the stiffness of the spring bar 15, thereby serving to increase the loads transmitted to the foundation.

FIG. 3 illustrates a spring bar 16 having a tapered or varying cross-sectional area and shape along its active length 21 between the connections 18,19. The spring bar 16 in FIG. 3 has a generally rectangular outer cross-section. The outer width W at connections 18,19 is generally dictated by the size and shape of the brackets 20 used to secure the spring bar 16 to the stator core 12. The outer width W of the spring bar 16 is constant along the entire length of the spring bar 16, as is its thickness T (not shown) in a direction into the plane of the paper. The cross-sectional area and shape, however, is tapered along its active length 21 by diamond shaped void segments 40 formed in the spring bar 16. The generally diamond shaped void segments 40 are preferably evenly spaced between two adjacent connections 18, 19 and are thereby centered in the active length 21. The nominal dimensions of one embodiment of a spring bar 16 for an electrical generator for a commercial power plant are as follows: the distance on centers between the connections 18,19 being 71.76 cm (28.25 inches); the longitudinal length of the void segment 40 measured at its maximum value along the center of the spring bar being 35.56 cm (14.0 inches); the maximum width of the void segment 40 in a direction perpendicular to its longitudinal length at the mid-point between connections 18,19 being 11.53 cm (4.54 inches); the width W being 1.84 cm (0.725 inches); and the thickness being 1.96 cm (0.77 inches) along its entire longitudinal length. For a longer generator, the distance on centers between the connections 18,19 may be increased without changing the other dimensions, however, the peak stress in the spring bar 16 will be increased accordingly. If the distance on centers must be increased beyond a length providing acceptable stress levels, an additional connection 18,19 can be added, thereby reducing the distance on centers and lowering the peak stress value. The cross-sectional area of spring bar 16 is therefore greatest at the connections 18,19 and at points 32 at the ends of the active length portions 21 immediately proximate to connections 18,19. Advantageously, these locations 32 are also the locations where the spring bar 16 experiences its maximum bending moment. Between two points 32 of maximum stress the spring bar 16 progressively tapers or narrows in cross-sectional area until a point 30 that is the mid-point of the active length portion 21 and is midway between the connection points. At the mid-point 30 between the connections 18,19 the cross-sectional area of the tapered spring bar 16 is at its smallest value and the bending moment is zero. This reduction in cross-sectional area provides increased flexibility to the spring bar 16. Advantageously the design of FIG. 3 provides for the point of maximum bending force 32 to be located remote from the point of smallest cross-sectional area 30, thereby reducing the peak stress in the spring bar 16. The force transmitted at mid-point 30 is shear force only; as there is no bending moment at this position midway between support points 18,19. A spring bar 16 in accordance with this invention may be fabricated from materials known in the art, for example spring steel or composite materials.

FIG. 4 illustrates an alternate embodiment of a spring bar where the outer width W of the spring bar 16 is tapered along its length. The outer width is widest at the connections 18,19 and at points 32 immediately proximate the connections 18,19 at the end of active length portion 21. The thickness at these locations is generally dictated by the size and shape of the brackets 20 used to secure the spring bar 16 to the stator core 12. Here again, as illustrated in FIG 3, the points 32 of maximum bending moment correspond to points 32 of maximum cross-sectional area. The width W tapers to a minimum at a point 30 mid-point of the active length portion 21, thereby providing a reduced cross-sectional area at the point 30 of zero bending moment. This reduction in cross-section area is achieved without increasing the maximum stress value in the spring bar 16, and it provides the advantage of a reduced stiffness for the spring bar structure.

FIG. 5 illustrates an third embodiment where the outer width W of the spring bar 16 is tapered between the connection points 18,19 but not to the same degree as the embodiment in FIG. 4. Two mirror image, generally triangular shaped, oppositely-facing void segments 41,42 are formed to further achieve the desired tapered cross-section in the active length portion 21.

The use of a spring bar 16 having a continuously tapering cross-section along its active length portion 21 between the connections 18,19 permits the desired low values of torsional natural frequency to be attained while still maintaining the required strength for carrying dead weight and operational loads. The tapered cross-section of the spring bar 16 as disclosed in the present invention may be visualized as a string of connected cantilevers. It will be appreciated by those skilled in the art that a tapered section cantilever will provide greater flexibility for a given material strength than would a uniform cross-section. The cross-section of a spring bar 16 in accordance with this invention may be tapered continuously along its active length 21 or it may have sections of constant cross-section combined with sections of tapered or varying cross-sectional area along its active length 21. FIG. 6 is a side view of a laminated spring bar 17 in accordance with the present invention. In the embodiment of FIG. 6 the thickness T of spring bar 17 is established by a laminated group of thinner members 45. All members 45 have the same width, and the spring bar 17 may be formed in any shape, for example those illustrated in FIGS. 2-5. A spring bar 17 formed by laminations of thinner members 45 will provide increased bending flexibility in a direction perpendicular to the plane of the laminations when compared to a spring bar 15,16 formed in the same shape from a single thickness of material. When installed in an electrical generator such as illustrated in FIG. 1, this increased flexibility is an increased radial flexibility. However, the use of such laminated material will not materially affect the flexibility in the torsional direction for such an application. The use of a spring bar 17 formed from a number of thinner members 45 provides the support system designer with an additional degree of flexibility for independently varying the spring characteristics of the spring bar 17 in the radial and tangential directions. For a given stiffness in the torsional direction as necessary to support dead weight and operational torque loads, a spring bar 17 formed from a plurality of thinner members 45 will provide a higher degree of flexibility in the radial direction than a single piece spring bar 15,16. This increased radial flexibility will reduce the radial excitation force transmitted from the dilating stator core through the spring bars to the stator frame. The amplitude of stator frame vibration, as a result of the reduction in excitation force, will be proportionately reduced. The greater flexure flexibility of the laminated spring bar 17 also permits larger amounts of pre-flexure during the assembly of the stator core 12 to the stator core frame 13, thereby permitting greater tolerance on true position requirements. In one embodiment the spring bar 17 is formed of two spring steel laminates each being .953 cm (0.375 inches) thick and separated by shims having a thickness of .05 cm (0.02 inches), so that the overall thickness of the laminated spring bar is 1.96 cm (0.770 inches). The laminates may be formed from low alloy carbon steel such as conforming to specification ASTM A-572. The two laminates may be joined together by a weld joint at the connection locations 18,19 with one or more plug welds to ensure the proper transfer of loads between the laminates and to facilitate handling and assembly of the component.

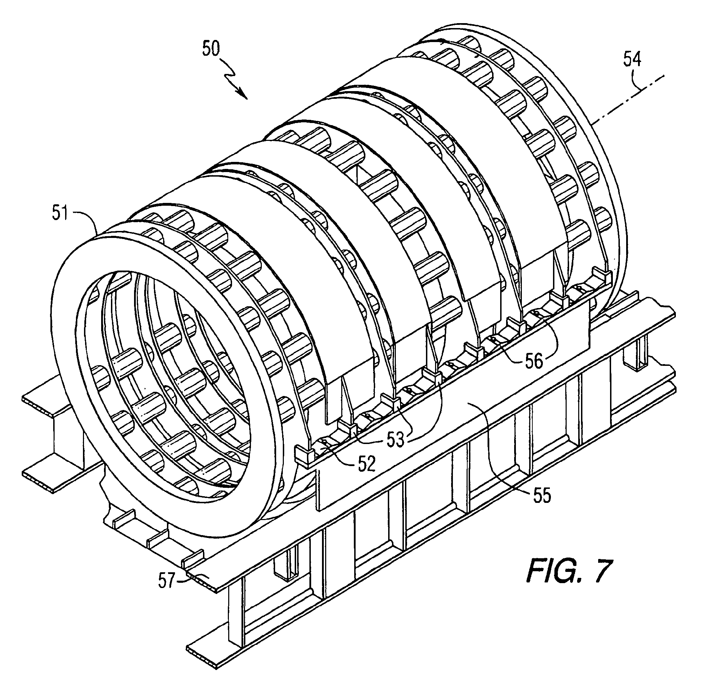

FIG. 7 is a perspective view of a support structure 50 for stator core frame 51 of an electric generator illustrating another embodiment of the present invention. This embodiment illustrates an air-cooled generator wherein the stator core (not shown) is rigidly connected to a stator core frame 51. Stator core frame 51 in this embodiment also serves as a passageway for cooling air for the generator. In the embodiment of FIG. 7, the outer periphery of the stator core frame 51 is connected to a tapered spring bar 52 at a plurality of attachment points 53 along its length. Note that in this embodiment, the spring bar 52 is positioned in a "tangential" direction, meaning that the direction of lowest bending stiffness is tangential to a radius of the electrical generator. This embodiment contrasts to the embodiment of Figure 1 wherein the spring bar 15,16 is positioned in a " radial" direction, meaning that the direction of lowest bending stiffness is along a radius of the electrical generator 10. The attachment points 53 form a line parallel to the central axis 54 of the generator, and they are located along the perimeter of the frame at points where the tangent line is vertical. The tapered spring bar 52 runs the longitudinal length of the stator core frame 51. The tapered spring bar 52 is, in turn, connected to a spring plate 55 disposed in an imaginary plane parallel to the axis of rotation of the generator. The spring bar 52 is connected to the spring plate 55 at a plurality of connection points 56 that are interposed between attachment points 53. The spring plate 55 extends vertically downward from attachment points 53. The opposed end of the spring plate 55 is mechanically connected to a foundation 57. Though only one spring plate 55 and spring bar 52 combination is shown, a second tapered spring bar 52 and spring plate 55 combination is connected to the opposite side of the stator core frame 51 at points along the frame 51 where the tangent line is vertical.

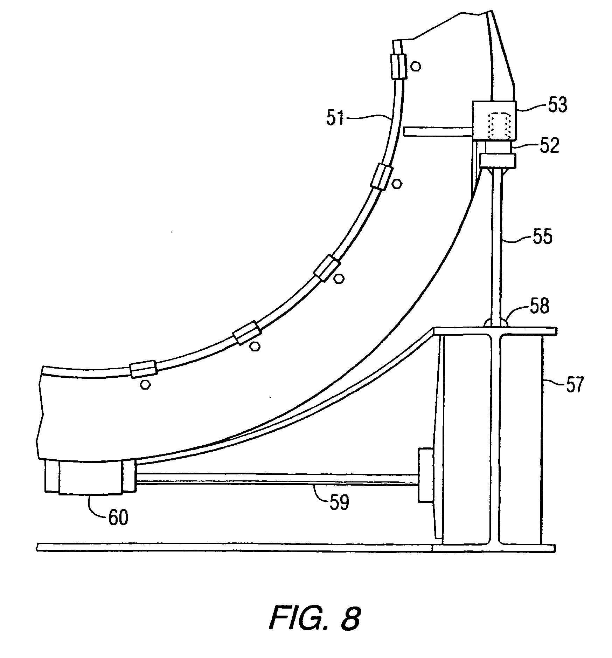

FIG. 8 is a partial end view of the device of FIG. 7. The spring plate 55 connection to the foundation 57 is shown in this view to be a weld 58. The top end of the spring plate 55 is shown attached to the tapered spring bar 52. The tapered spring bar 52 is, in turn, attached to the stator core frame 51 at a plurality of attachment points 53.

Because the spring bars 52 of Figure 7 are positioned in a tangential direction, they do not provide sufficient flexibility in the radial direction to minimize the forces generated by the rotating magnetic field. In this embodiment, verical spring plates 55 provide the desired flexibility in the radial direction. Since the vertical spring plates 55 have considerable resilience in the horizontal (radial) direction, and because there are only two spring plates 55 positioned on opposed sides of the stator core frame 51, the generator would not be properly restrained from horizontal movement if it were supported by spring plates 55 alone. To provide the necessary additional horizontal support, the support system of FIG. 8 also includes a stabilization bar 59. One end of the stabilization bar 59 is attached to the stator core frame 51, and the opposed end is attached to the foundation 57. The stabilization bar 59 is connected in this embodiment so that it is in a horizontal position. The stabilization bar 59 is fixed to the stator core frame 51 at an attachment point 60 which protrudes beyond the outer periphery of the stator core frame 51. Depending upon the size of the electric generator 50, a plurality of stabilization bars 59 may be used. The location of the attachment points 60 are chosen to be at points of near zero tangential vibration, as predicted by calculation techniques known in the art, such as those described in the Baudry patent.

The generator support system of the present invention allows the designer to tune the resonant torsional frequency of the system to minimize the loads transmitted to the foundation 57. In particular, the present invention allows the designer to control the system natural frequency in both the radial and the torsional directions.
It is desirable to "low tune" the torsional natural frequency of the support system. The addition of the spring bar 52 as a means for connecting the stator core frame 51 and the spring plate 55 enables the desired low values of torsional natural frequency to be attained. This feature is enhanced by incorporating a tapered profile to the spring bar 52 which may be visualized as a string of connected cantilevers. As discussed above, a tapered section spring bar will provide greater flexibility for a given material strength than would a parallel section because the point of smallest cross-section is remote from the point of maximum stress.

The spring plates 55 provides vertical support for the stator's dead weight and isolate the radial vibrations of the stator core in the electric generator 50. The spring plates 55 also provide tangential stiffness to support the stator core (not shown) and stator core frame 51. The tapered spring bar 52 serves to attenuate tangential forces experienced by the electric generator 50 during off-normal operation. The stabilization bar 59 provides horizontal support for the core and frame.

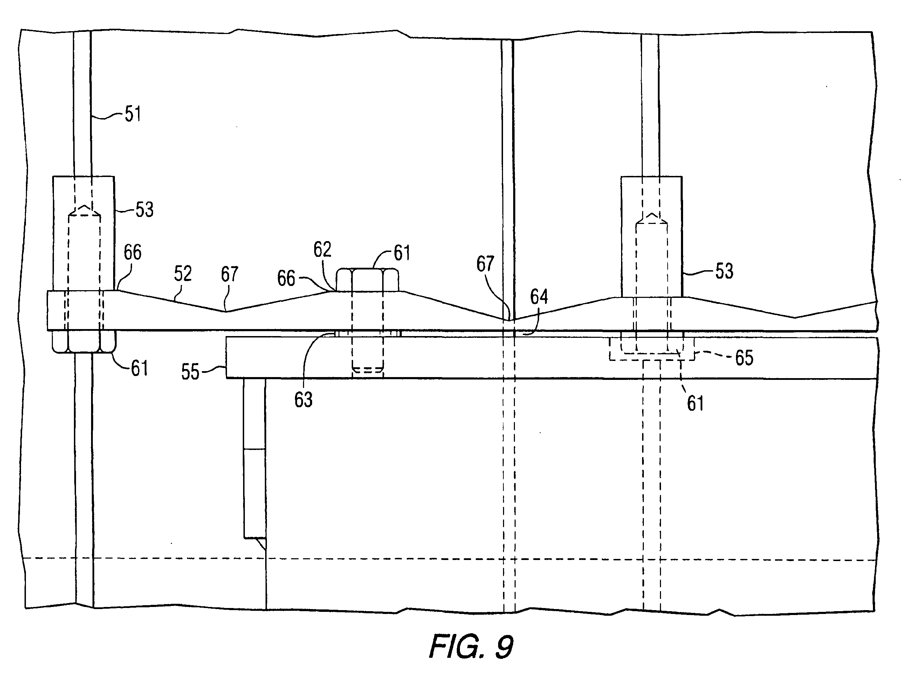

FIG. 9 is a partial side elevation view of the stator support structure of FIG. 7. In the embodiment of FIG. 9 a bottom side of the tapered spring bar 52 is fixed to the top of spring plate 55 with mechanical connectors 61, for example a threaded bolt, at a plurality of predetermined attachment points 62. A washer-like spacer 63 fits around the mechanical connector 61 and is compressed between the spring plate 55 and the tapered spring bar 52 when the mechanical connector 61 is tightened. The spacer 63 creates a gap 64 between the spring plate 55 and spring bar 52 at all other locations along the longitudinal length of the spring plate 55 and spring bar 52 where a spacer is not in place. The tapered spring bar 52 is fixed to the stator core frame 51, also with mechanical connectors 61, at a plurality of predetermined attachment points 53 along the perimeter of the stator core frame 51. A counter-bore 65 is provided in the top of the spring plate 55 to provide room for the mechanical connector 61 to deflect downward during relative movement between the stator frame 51 and the spring plate 55. The spring bar 52 provides a mechanical connection between the stator frame 51 and the spring plate 55, while the gap 64 allows for relative vertical movement between those two structures. Spring bar 52 and its counterpart located on the opposite side of the generator provide a spring connection that adds flexibility to the support system in the tangential direction. Spring bar 52 is very stiff in the horizontal direction and is essentially a rigid connection in a the direction perpendicular to the plane of the spring plate, and therefore its presence does not significantly affect the reaction of the support system to radial forces. However, the stiffness of the spring bar 52 in the vertical direction can be selected by the support system designer to reduce the natural frequency in the tangential direction, thereby providing for a reduction in the short circuit torque build-up forces that are transmitted to the spring plate 55 and foundation 57.

The spring bar 52 may be constructed of materials known in the art for forming springs, such as spring steel or other metal. The spring bar 52 may have a variety of shapes but is illustrated in the figures as being generally rectangular with a varying thickness along its length. The thickness of spring bar 12 is illustrated as being thickest at the points of attachment 53,62 to the stator core frame 51 and the spring plate 55. The thickness at these locations is generally dictated by the size and shape of the mechanical connectors 61 used to connect the spring bar 52 to the frame 51 and spring plate 55. The most simple design for the spring bar 52 would be to have a constant thickness along its entire length. However, if the thickness required at the connection points 53,62 is utilized along the entire length of the spring bar 52, the resulting stiffness of the spring will generally be too high. Therefore, the spring bar 52 is as shown in Fig. 9 where the spring has a tapered thickness along its length. A spring bar 52 with a tapering configuration is used so that the spring bar's cross sectional thickness is greatest at the connection points. Advantageously, these locations are also the locations where the spring bar 52 experiences its maximum bending moment due to torsional loads, such as short-circuit conditions. Between two points 66 of maximum bending force the spring bar 52 progressively narrows, or continuously tapers, until a point 67 midway between the adjacent points 66 of maximum bending moment. At the mid-point 67 between the points of attachment 53,62 the thickness of the tapered spring bar 52, and thereby its cross-sectional area, is at its smallest value. This reduction in thickness provides increased flexibility to the spring bar 52 in the tangential direction. An alternative embodiment of spring bar 52 (not shown) would have a first thickness at the points of attachment 53,62 and a second reduced thickness along the entire length of the spring between those point. This alternative embodiment provides improved flexibility due to the continuous reduced cross section, however, it has the disadvantage of having its reduced cross sectional area located at or near the point of maximum bending force 66, thus creating a point of very high bending stress. Advantageously the tapered design of Fig. 9 provides for the point of maximum bending force 66 to be located remote from the point of smallest cross-sectional area 67, thereby reducing the peak stress in the spring bar 52. Preferably the minimum cross-sectional area section transmits shear force only, as there is no bending moment at the midpoint between attachment points.

## Claims

1. An apparatus for attaching an electric generator stator core (12) to a support structure (13, 57), the apparatus comprising:
a spring bar (16, 52) attached to said stator core (12) at a first location (18, 53) and attached to the support structure (13, 57) at a second location (19, 62) and having an active length portion (21) therebetween; and
**characterized by** said spring bar (16, 52) further comprising a cross-section area that changes along said active length portion (21).

2. The apparatus of claim 1, further **characterized by** said spring bar (16, 52) comprising a generally rectangular cross-section having a width (W) that tapers continuously along said active length portion (21).

3. The apparatus of claim 1, further **characterized by** a point of smallest cross-sectional area (30) along said active length portion (21) being located remote from a point of highest bending force (32) in said active length portion (21).

4. The apparatus of claim 1, further **characterized by** said spring bar (17) further comprising a plurality of layers of material (45).

5. The apparatus of claim 1, further **characterized by** said spring bar (16, 52) comprising a minimum cross-sectional area at a mid-point (30) between said first (18) and said second (19) locations.

6. The apparatus of claim 1, further **characterized by** said spring bar (16, 52) comprising a uniform width (W) and thickness (T) along its length and further comprising a void segment (40) formed in said spring bar (16, 52) between said first (18) and said second (19) locations.

7. The apparatus of claim 6, further **characterized by** said void segment (40) comprising a generally diamond shape.

8. The apparatus of claim 1, further **characterized by** said spring bar (16, 52) comprising two mirror image oppositely-facing generally triangular shaped void segments (41,42) formed in said spring bar (16, 52) between said first (18) and said second (19) locations.

9. The apparatus of claim 1, further **characterized by** said spring bar (16, 52) comprising a point of minimum cross-sectional area (30) at a point along its length subjected to zero bending moment due to torsional loading.

10. The apparatus of claim 1, wherein the spring bar (52) is disposed in a tangential direction, and further **characterized by** a spring plate (55) attached between the spring bar (52) and the support structure (57), the spring plate (55) being disposed in a vertical plane parallel to an axis of rotation (54) of the electrical generator.

11. The apparatus of claim 1, further **characterized by** a stabilization bar (59) attached between the foundation (57) and the stator core frame (51).

## Patentansprüche

1. Vorrichtung zur Befestigung des Ständerblechpaketes (12) eines elektrischen Generators an einer Tragkonstruktion (13, 57), wobei die Vorrichtung Folgendes umfasst: einen Federstab (16, 52), der an einer ersten Stelle (18, 53) an dem besagten Ständerblechpaket (12) und an einer zweiten Stelle (19, 62) an der Tragkonstruktion (13, 57) befestigt ist und dazwischen einen aktiven Längenabschnitt (21) aufweist; und
**dadurch gekennzeichnet, dass** der besagte Federstab (16, 52) ferner eine Querschnittsfläche besitzt, die sich entlang des besagten aktiven Längenabschnitts (21) ändert.

2. Vorrichtung nach Anspruch 1, ferner **dadurch gekennzeichnet, dass** der besagte Federstab (16, 52) einen im Großen und Ganzen rechteckigen Querschnitt mit einer Breite (W) aufweist, die sich entlang des besagten aktiven Längenabschnitts (21) kontinuierlich verringert.

3. Vorrichtung nach Anspruch 1, ferner **dadurch gekennzeichnet, dass** sich ein Punkt (30) der kleinsten Querschnittsfläche entlang des besagten aktiven Längenabschnitts (21) entfernt von einem Punkt (32) der höchsten Biegekraft auf dem besagten aktiven Längenabschnitt (21) befindet.

4. Vorrichtung nach Anspruch 1, ferner **dadurch gekennzeichnet, dass** der besagte Federstab (17) ferner aus einer Vielzahl von Schichten eines Materials (45) besteht.

5. Vorrichtung nach Anspruch 1, ferner **dadurch gekennzeichnet, dass** der besagte Federstab (16, 52) eine minimale Querschnittsfläche an einem Mittelpunkt (30) zwischen der besagten ersten (18) und der besagten zweiten (19) Stelle aufweist.

6. Vorrichtung nach Anspruch 1, ferner **dadurch gekennzeichnet, dass** der besagte Federstab (16, 52) eine gleich bleibende Breite (W) und Dicke (T) entlang seiner Länge aufweist und ferner einen Hohlraumabschnitt (40) umfasst, der in dem besagten Federstab (16, 52) zwischen der besagten ersten (18) und der besagten zweiten (19) Stelle ausgebildet ist.

7. Vorrichtung nach Anspruch 6, ferner **dadurch gekennzeichnet, dass** der besagte Hohlraumabschnitt (40) eine allgemein rhombische Form aufweist.

8. Vorrichtung nach Anspruch 1, ferner **dadurch gekennzeichnet, dass** der besagte Federstab (16, 52) zwei zueinander spiegelbildliche, einander gegenüberliegende, allgemein dreieckförmige Hohlraumabschnitte (41, 42) aufweist, die in dem besagten Federstab (16, 52) zwischen der besagten ersten (18) und der besagten zweiten (19) Stelle ausgebildet sind.

9. Vorrichtung nach Anspruch 1, ferner **dadurch gekennzeichnet, dass** der besagte Federstab (16, 52) einen Punkt (30) minimaler Querschnittsfläche an einer Stelle entlang seiner Länge aufweist, an der ein Biegemoment null infolge von Torsionsbeanspruchung vorliegt.

10. Vorrichtung nach Anspruch 1, wobei der Federstab (52) in einer tangentialen Richtung angeordnet ist, und ferner **gekennzeichnet durch** eine elastische Platte (55), die zwischen dem Federstab (52) und der Tragkonstruktion (57) befestigt ist, wobei die elastische Platte (55) in einer vertikalen Ebene parallel zu einer Drehachse (54) des elektrischen Generators angeordnet ist.

11. Vorrichtung nach Anspruch 1, ferner **gekennzeichnet durch** eine Stabilisierungsstange (59), die zwischen dem Fundament (57) und dem Ständergehäuse (51) befestigt ist.

## Revendications

1. Appareil pour attacher un noyau statorique de générateur électrique (12) à une structure de support (13, 57), l'appareil comprenant :
une barre élastique (16, 52) attachée audit noyau statorique (12) en un premier endroit (18, 53) et attachée à la structure de support (13, 57) en un second endroit (19, 62) et comportant une partie formant longueur active (21) entre eux, et **caractérisé en ce que** ladite barre élastique (16, 52) possède par ailleurs une aire de section droite qui change le long de ladite partie formant longueur active (21).

2. Appareil selon la revendication 1, **caractérisé par** ailleurs par le fait que ladite barre élastique (16, 52) possède une section droite globalement rectangulaire ayant une largeur (W) qui s'effile continuellement le long de ladite partie formant longueur active (21).

3. Appareil selon la revendication 1, **caractérisé par** ailleurs par le fait qu'un point de plus petite aire de section droite (30) sur ladite partie formant longueur active (21) est situé à distance d'un point de plus grande force de flexion (32) dans ladite partie formant longueur active (21).

4. Appareil selon la revendication 1, **caractérisé par** ailleurs par le fait que ladite barre élastique (17) comprend par ailleurs une pluralité de couches de matériau (45).

5. Appareil selon la revendication 1, **caractérisé par** ailleurs par le fait que ladite barre élastique (16, 52) possède une aire de section droite minimale en un point médian (30) entre ledit premier (18) et ledit second (19) endroits.

6. Appareil selon la revendication 1, **caractérisé par** ailleurs en ce que ladite barre élastique (16, 52) possède une largeur (W) et une épaisseur (T) uniformes dans le sens de la longueur et comprend par ailleurs un segment vide (40) formé dans ladite barre élastique (16, 52) entre ledit premier (18) et ledit second (19) endroits.

7. Appareil selon la revendication 6, **caractérisé par** ailleurs par le fait que ledit segment vide (40) possède une forme globalement en diamant.

8. Appareil selon la revendication 1, **caractérisé par** ailleurs par le fait que ladite barre élastique (16, 52) comprend deux segments vides de forme globalement triangulaire, se faisant face, en image réfléchie (41, 42) formés dans ladite barre élastique (16, 52) entre ledit premier (18) et ledit second (19) endroits.

9. Appareil selon la revendication 1, **caractérisé par** ailleurs par le fait que ladite barre élastique (16, 52) comprend un point à aire de section droite minimale (30) en un point de sa longueur soumis à un moment de flexion nul à cause d'une charge torsionnelle.

10. Appareil selon la revendication 1, dans lequel la barre élastique (52) est disposée dans une direction tangentielle, et **caractérisé par** ailleurs par une plaque élastique (55) attachée entre la barre élastique (52) et la structure de support (57), la plaque élastique (55) étant disposée dans un plan vertical parallèle à un axe de rotation (54) du générateur électrique.

11. Appareil selon la revendication 1, **caractérisé par** ailleurs par une barre de stabilisation (59) attachée entre l'assise (57) et le bâti de noyau statorique (51).
